# EUROPEAN PATENT APPLICATION

(11) **EP 1 577 276 A1**
(43) Date of publication of application: **21.09.2005**
(21) Application number: 04100905.1
(22) Date of filing: 05.03.2004
(51) Int. Cl.: C03C 17/34, C03C 17/42, C03C 27/10, B32B 17/10, E06B 3/66

(54) **GLAZING PANEL**

(71) Applicant: GLAVERBEL, 1170 Bruxelles (BE)
(72) Inventor: The designation of the inventor has not yet been filed
(74) Representative: Farmer, Guy Dominic

(57) **Abstract**

A glazing panel having dimensions of at least 40 cm by 30 cm and a mechanical resistance rating of at least 2B2 in a pendulum test according to European standard EN12600comprises
a first glass sheet having a thickness within the range 1.5 mm to 14 mm
a second glass sheet having a thickness within the range 1.5 mm to 14 mm, spaced from the first glass sheet and
an interlayer adhered between the first and second glass sheets so as to form a laminated assembly, the interlayer having a maximum heat release rate of less than 650 kW/m².

## Description

This invention relates to glazing panels and particularly, but not exclusively, to glazing panels which are intended to provide a degree of fire protection or fire screening.

A fire screening glazing panel preferably fulfils a number of separate functions. These may include:
- resisting breakage and/or collapsing when exposed to fire so as to provide a physical barrier to smoke, hot gasses and flames;
- providing a barrier to the propagation of heat from a fire so as to provide a passageway on the fire protected side of the glazing which can be used to evacuate a building and/or so as to reduced the risk of spontaneous combustion of flammable materials on the fire protected side.

Building codes define degrees of fire shielding required for different building applications.

According to one aspect, the present invention provides a glazing panel as defined in Claim 1.

The maximum heat release rate of the interlayer may be less than 600, 550, 500, 450 or 400 kW/m². The maximum heat release rate may be determined by subjecting a sample of the interlayer material to a test in accordance with International standard ISO 5660-1 and measuring the heat release rate as a function of time. This may then be expressed as heat release rate per m² of interlayer and the maximum heat release rate in KW/m² may be determined.

Although a laminating interlayer for example of PVB may be used to provide a glazing with a certain mechanical resistance, such interlayers have generally been considered disadvantageous to the performance of glazing panels in fire test situations. Such materials are prone to combust, to loose their integrity and to deteriorate the glazing performance in a fire test.

In order to perform a pendulum test according to European Standard EN12600, it is generally necessary to test a glazing sample having dimensions of 876 mm by 1938 mm (±2mm). In the context of the present invention, the rating of a glazing panel according to this standard may be assessed for a glazing panel which does not have the appropriate dimensions by cutting the glazing panel to the appropriate size if possible or assessing the rating according to the test of a sample glazing having an appropriate size and having the same structure (for example being sold as the same product) as the glazing panel in question.

One aspect of the invention is at least partially based on the following reasoning developed by the inventors:
- if the effect of the interlayer material during fire exposure can be controlled so that it does not significantly deteriorate the glazing panel's fire performance (even if the laminating interlayer does not contribute significantly to the fire performance) then a satisfactory level of fire performance may be achieved
- ensuring that the rate at which heat is released from a laminating interlayer when a glazing panel is exposed to fire conditions is sufficiently low so as to avoid creating a rapid additional release of heat which may be detrimental to the fire performance of the glazing panel may prevent the laminating interlayer from having a significant negative effect on fire performance
- such an interlayer may in addition contribute to a desired level of mechanical resistance
- even a modest improvement in fire performance may be significant if, for example, it allows a glazing panel to cross the threshold required for a particular fire rating.

Mechanical resistance of a glazing panel may be assessed as set out in European Standard EN12600 (often referred to as the pendulum test). Glazings in accordance with various aspects of the invention may have a rating of 2B2 or preferably 1B1 according to this standard.

Glazings in accordance with various aspects of the invention may have fire ratings of at least E15, E20, E30, E45, E60, E90, E120, EW15, EW20, EW30, EW45, EW60, EW90, EW120, EI15, EI20, EI30, EI45, EI60, EI90 or EI120 as defined according to European Standards EN 1363 and EN 1364, particularly EN1364-1 . References herein to fire ratings and/or performance in fire tests are made with respect to these standards.

The invention may allow a glazing panel having, for example, dimensions of at least 0.4m by 0.4m, 0.4m by 0.5m, 0.5m by 0.5m, 0.5m by 0.6m, 0.6m by 0.6m, 0.6m by 0.7m, 0.7m by 0.7m, 0.7m by 0.8m, 0,8m by 0;9m, 0.9m by 0.9m, 0.9m by 1m, 0.9m by 2.2m, or 0.9m by 2.4m, 0.95m by 1.95m, 1m by 2m, 1m by 2.2m, 1m by 2.4m, 1.2m by 2m, 1.2m by 2.2m, , 1.2m by 2.4 m, 1.2m by 2.6m, 1.3m by 2m, 1.3m by 2.2m, 1.3m by 2.4 m, 1.3m by 2.6m, 1.3m by 2.7m, 1.4m by 2m, 1.4m by 2.2m, 1.4m by 2.4 m, 1.4m by 2.6m or 1.4m by 2.7m to have a defined fire resistance.

Glazing panels in accordance with various aspects of the invention are preferably non-wired glazing panels, that is to say, the sheets of glass they contain are not wired glass.

Some or all glass sheets used may be of soda lime glass, preferably float glass. Some or all of the glass sheets may be non-soda lime glass, for example, glass selected from borosilicate glass, glass having an expansion coefficient less than or equal to 9 x 10⁻⁶ and glass having a Tg (transformation temperature) greater than or equal to 580°C

In embodiments of the invention which use an intumescent layer, such a layer may have a thickness of less than or equal to 2.5mm, 2mm, 1.9mm or 1.6mm; such an intumescent layer may have a thickness on greater than or equal to 1mm, 1.1mm or 1,2mm. Such a layer preferably has a thickness within the range of 1.2 to 1.6mm. The intumescent layer may comprise or consist essentially of a silicate, for example a potassium silicate or preferably a sodium silicate.

According to another aspect, the present invention provides a glazing panel as defined in Claim 4.

Such fire resistance has not previously been obtainable in such structures. The multiple sheet glazing panel may have a fire resistance of greater than or equal to EW70, EW75, EW80, EW90 or EW100.

The sealed gas filled space may be filled with air or with a gas or mixture of gasses, for example with a gas mixture which increases the heat insulation of the glazing panel.

The following structures according to this aspect of the invention may be particularly advantageous:
- Fire = > Annealed Soda Lime glass (4mm)/0.76mm PVB interlayer/ Annealed Soda Lime glass (4mm)/solar control layer/sealed gas space/infra red reflecting layer/Tempered soda lime glass sheet (6mm)
- Fire = > Annealed Soda Lime glass (4mm)/0.76mm PVB interlayer/ Annealed Soda Lime glass(4mm) /sealed gas space/ solar control layer/ Tempered soda lime glass sheet (6mm)
- Fire = > Annealed Soda Lime glass (6mm)/0.76mm PVB interlayer/ Annealed Soda Lime glass (6mm)/sealed gas space/ solar control layer/ Tempered soda lime glass sheet (6mm)
- Fire = > infra red reflective layer/ Annealed Soda Lime glass (4mm)/0.76mm PVB interlayer/ Annealed Soda Lime glass(4mm)/sealed gas space/ solar control layer/ Tempered soda lime glass sheet (6mm)

Where the term "Fire" indicates the orientation of the glazing panel for its fire rating and the coating layers are present as indicated on the adjacent glass surfaces. These structures and others defined in claim 5 may be particularly useful as architectural glazings for external building facades.

The structure: infra red reflecting coating/tempered 6mm glass sheet/sealed gas space/infra red reflecting layer/tempered 6mm glass sheet/0.76mm PVB interlayer/ tempered 12 mm glass sheet may also be advantageous, with or without variations in the glass thicknesses, for example for maritime applications, particularly external cabin windows. In such applications, the glazing panel may have a surface area of greater than or equal to 0.8 m², 1m², 1.2m², 1.3m², 1.4m², or 1.5 m².

The structures defined in claims 6, 7 and 8 may be particularly suited to interiors architectural glazing panels. The thickness of the glass sheets may be approximately, 3mm, 4mm, 5mm or 6mm, with the individual sheets in each glazing panel having substantially the same thickness or different thicknesses. This structure may be used to provide a range of glazing panels have different total thicknesses and/or different fire ratings.

According to a further aspect, the present invention provides a glazing panel as defined in Claim 9. This may provide an alternative to polished wired glass by providing a desired fire rating in a relatively light structure without the inconvenience of a visible, wire grill embedded in the glazing. These structures may also combine these advantages with a desired level of mechanical resistance.

According to another aspect, the present invention provides a glazing panel as defined in claim 10. As defined by claims 11 and 12, the intumescent layer in such structures may be different from that commonly used in fire rated glazing structures. This may allow the intumescent layer to be optimised, particularly to ensure sealing or gas tightness during a fire test to ensure the integrity of the glazing panel.

The dependent claims define preferred and/or alternative embodiments of the invention.

In various embodiments of the inventions:
- one or more of the glass sheets may be heat tempered, for example with a surface compression of between about 80 MPa and 150 MPa, preferably between about 90 and 110 MPa, for example about 100 MPa
- the infra-red reflectance of the glazing panel in the band of wavelengths 1-10 microns may be at least 60%, 65%, 70% 75%, 80%, 85%, 90% or 95%. This may provide good fire screening properties.
- coating layers may be formed pyrolytically on the glass substrate or by a vacuum technique, for example, by sputtering. In the latter case, the infra-red reflecting material is preferably silver or an alloy containing silver.
- the normal emissivity of the glazing panel and/or of a coating may be less than or equal to 0.2, 0.15, 0.1 or 0.05. Normal emissivity as used herein refers to the normal emissivity determined in accordance with European standards EN 12898 / EN 673. This may confer good fire resistance.

The following terms used herein have the following meanings, unless the context requires otherwise:
- Infra red reflecting layer means a coating layer selected from the group consisting of : a fluorine doped tin oxide coating; a coating comprising the structure antireflective dielectric layer/infra red reflecting layer/antireflective dielectric layer (for example, the coating stacks TiO₂/Ag/barrier/TiO₂ or TiO₂/Ag/barrier/TiO₂/Ag/barrier/TiO₂); a coating layer having a normal emissivity of less than 0.3, preferably less than 0.2.
- Solar control layer means a coating layer which increases the selectivity (i.e. the ratio of the luminous transmittance to the solar factor) of the substrate to which it is applied.

The Luminous transmission of the glazing panel (i.e. the luminous flux transmitted through a substrate as a percentage of the incident luminous flux) may be, for example, greater than 15%, 30%, 50%, 60% or 70%.

The energetic transmission of the glazing panel (i.e. the solar flux (luminous and non-luminous) transmitted through a substrate as a percentage of the incident solar flux) may be les than or equal to 70%, 65%, 60%, 55%, 50%, 45% or 40%.

The total UV transmittance of a glazing panel according to at least some embodiments of the invention measured according to European standard EN410 may be less than 5%, 2% or 1% and is preferably less than 0.5%.

Examples of the present invention will now be described by way of example only, with reference to:
- FIG 1: which is a cross section of a glazing panel according to one embodiment the invention; and
- FIG 2: which is a cross section of a glazing panel according to another embodiment of the invention

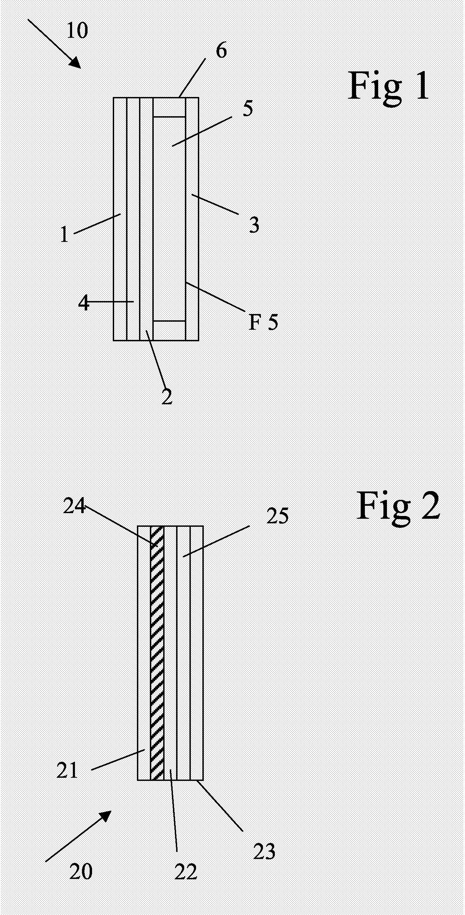

The glazing panel 10 of FIG 1 comprises the following elements:
- a first glass sheet 1
- a second glass sheet 2
- a third glass sheet 3
- 0.76mm thick interlayer of PVB 4 assembled between the first 1 and second 2 glass sheets
- a 15 mm wide sealed gas containing enclosure 5, having a spacer 6 running around its periphery arranged between the second 2 and third 3 glass sheets.

The first 1 and second 2 glass sheets are approximately 4mm thick and are made of annealed, soda lime glass. The third glass sheet 3 is approximately 6mm thick and is made of tempered soda lime glass having a surface compression at a central portion of about 100 MPa.

Face five F5 of the glazing panel on the third sheet of glass 3 carries a coating stack which provides solar control and infra red reflection properties (not shown) and which consists of the structure from the glass sheet of: antireflective dielectric layer/Ag/barrier/antireflective dielectric layer/Ag/barrier/antireflective dielectric layer.

The PVB interlayer has a maximum heat release rate of about 425 kW/m² when measured in the way previously referred to.

The glazing panel has dimensions of approximately 1m x 1.5m and has a fire rating of EW60 when the first sheet of glass 1 is exposed to a heat source during a fire test. The glazing panel has a mechanical resistance of 2B2 in the punching bowl test with impact of the punching bow arranged against the first glass sheet.

The glazing panel 20 of FIG 2 comprises the following elements:
- a first glass sheet 21
- a second glass sheet 22
- a third glass sheet 23
- 1.6 mm thick intumescent layer 24 comprising a sodium silicate assembled between the first 21 and second 22 glass sheets
- a 0.76 mm thick PVB interlayer 25 arranged between the second 22 and third 23 glass sheets.

Each of the first 21, second 22 and third 23 glass sheets are approximately 2mm thick and are made of annealed, soda lime glass.

The PVB interlayer has a maximum heat release rate of about 425 kW/m² when measured in the way previously referred to.

The glazing panel has dimensions of approximately 1m x 1.5m and has a fire rating of EW30 when the first sheet of glass 1 is exposed to a heat source during a fire test. The glazing panel has a mechanical resistance of 2B2 in the punching bowl test with impact of the punching bow arranged against the third glass sheet.

## Claims

1. A glazing panel having dimensions of at least 40 cm by 30 cm comprising
a first glass sheet having a thickness within the range 1.5 mm to 14 mm
a second glass sheet, spaced from the first glass sheet and having a thickness within the range 1.5 mm to 14 mm,
an interlayer adhered between the first and second glass sheets so as to form a laminated assembly, the interlayer being selected from a polyvinyl butyral (PVB) based material and an ethylvinylacetate (EVA) based material
**characterised in that**
the interlayer has a maximum heat release rate of less than 650 kW/m² and
**in that** the glazing panel has a mechanical resistance rating of at least 2B2 in a pendulum test according to European standard EN12600.

2. A glazing panel in accordance with claim 1, in which the glazing panel further comprises
a third glass sheet having a thickness within the range 1.5 mm to 14 mm spaced from the second glass sheet; and
an intumescent layer positioned between the second and the third glass sheets.

3. A glazing panel in accordance claim 1, in which the glazing panel comprises at least three substrates adhered together by means of interlayers to form a laminated assembly, the glazing panel having a fire rating of at least EI30 and a bullet resistance of at least class BR3 according to European standard EN1063.

4. A glazing panel consisting essentially of
a first, non-wired glass sheet,
a second, non-wired glass sheet, the second glass sheet being spaced from the first glass sheet without an intervening intumescent material
an interlayer adhered between the first and second glass sheets so as to form a laminated assembly, the interlayer being selected from a polyvinyl butyral (PVB) based material and an ethylvinylacetate (EVA) based material a third, non-wired glass sheet having a thickness within the range 1.5 mm to 14 mm and having a surface compression at a central portion of at least 80 MPa., spaced from the second glass sheet by a sealed gas filled space, with optional coatings on one or more of the glass sheets,
the glazing panel having a fire rating of at least EW60 when the first glass sheet is exposed to a heat source in a fire test.

5. A glazing panel in accordance with of claim 4, in which the glazing panel has one of the following characteristics
a) the glazing panel has dimensions of at least 40 cm by 30 cm;
b) the glazing panel has dimensions of at least 40 cm by 30 cm and consists essentially of the structure first glass sheet/interlayer/second glass sheet/solar control coating layer/spacing/infra red reflecting layer/third glass sheet with each of the glass sheets having a thickness in the range 3 mm to 7 mm, and the third glass sheet having a surface compression at a central portion of at least 80 MPa;
c) the glazing panel has dimensions of at least 40 cm by 30 cm and consists essentially of the structure first glass sheet/interlayer/second glass sheet/solar control coating layer/spacing/third glass sheet with each of the glass sheets having a thickness in the range 3 mm to 7 mm, and the third glass sheet having a surface compression at a central portion of at least 80 MPa;
d) the glazing panel has dimensions of at least 40 cm by 30 cm and consists essentially of the structure infra red reflecting layer/first glass sheet/interlayer/second glass sheet/ spacing/ solar control coating layer/third glass sheet with each of the glass sheets having a thickness in the range 3 mm to 7 mm, and the third glass sheet having a surface compression at a central portion of at least 80 MPa
e) the glazing panel has a surface area of greater than or equal to 0.8 m² and consists essentially of the structure /first glass sheet/interlayer/second glass sheet/ infra red reflecting layer/spacing/third glass sheet/infra red reflecting coating with each of the glass sheets having a thickness in the range 5.5 mm to 16.5 mm and each glass sheet having a surface compression at a central portion of at least 80 MPa
f) the glazing panel has dimensions of at least 40cm by 30cm and consists essentially of the structure infra red reflecting layer/first glass sheet/spacing/infra red reflecting layer/second glass sheet/ interlayer/third glass sheet with the first glass sheet having a thickness between 5.5 mm and 6.5 mm, the second glass sheet having a thickness between 5.5mm and 6.5mm, the third glass sheet having a thickness between 11.5mm and 12.5mm and each of the glass sheets having a surface compression at a central portion of at least 80 MPa
g) the glazing panel has dimensions of at least 40cm by 30cm and consists essentially of the structure infra red reflecting layer/first glass sheet/spacing//second glass sheet/ interlayer/ infra red reflecting layer/ third glass sheet with the first glass sheet having a thickness between 5.5 mm and 6.5 mm, the second glass sheet having a thickness between 11.5mm and 12.5mm, the third glass sheet having a thickness between 5.5mm and 6.5mm and each of the glass sheets having a surface compression at a central portion of at least 80 MPa
h) the glazing panel has dimensions of at least 40cm by 30cm and consists essentially of the structure infra red reflecting layer/first glass sheet/spacing//second glass sheet/ interlayer/ infra red reflecting layer/ third glass sheet with the first glass sheet having a thickness between 5.5 mm and 6.5 mm, the second glass sheet having a thickness between 5.5mm and 6.5mm, the third glass sheet having a thickness between 9.5mm and 13.5mm and each of the glass sheets having a surface compression at a central portion of at least 80 MPa

6. A glazing panel having dimensions of at least 1m by 2.2m and a fire rating of at least EW60 in which the glazing panel consists essentially of the structure of
a first glass sheet, the first glass sheet having a thickness within the range 2.5 mm to 8.5 mm
a second glass sheet, the second glass sheet having a thickness within the range 2.5 mm to 8.5 mm, spaced from the first glass sheet
an interlayer adhered between the first and second glass sheets so as to form a laminated assembly
at least one face of each of the glass substrates being provided with a coating layer having a normal emissivity of less than 0.3.

7. A glazing panel in accordance with claim 6, in which an internal face of each of the glass sheets, adjacent to the interlayer, is provided with an infra red reflecting layer.

8. A glazing panel in accordance with claim 6, in which an exposed face of each of the glass sheets, spaced from the interlayer, is provided with an infra red reflecting coating.

9. A glazing panel having dimensions of at least 40 cm by 30 cm, having a fire rating of at least EW30 and a mechanical resistance of at least 2B2 in a pendulum test according to European standard EN12600, in which the glazing panel has one of the following characteristics
a) the glazing panel consists essentially of the structure of
a first glass sheet having a thickness within the range 1.5 mm to 4.5 mm the first glass sheet being selected from the group consisting of glass having an expansion coefficient less than or equal to 9 x 10⁻⁶ and glass having a Tg greater than or equal to 580°C
a second glass sheet having a thickness within the range 1.5 mm to 4.5 mm, the second glass substrate being selected from the group consisting of soda lime glass, glass having an expansion coefficient less than or equal to 9 x 10⁻⁶ and glass having a Tg greater than or equal to 580°C
and an interlayer adhered between the first and second glass sheets so as to form a laminated assembly, the interlayer being selected from a polyvinyl butyral (PVB) based material and an ethylvinylacetate (EVA) based materials first sheet
b) the glazing panel consisting essentially of
a first, non-wired glass sheet having a thickness within the range 1.5 mm to 2.5 mm,
a second, non-wired glass sheet having a thickness within the range 1.5 mm to 2.5 mm, the second glass sheet being spaced from the first glass sheet an interlayer adhered between the first and second glass sheets so as to form a laminated assembly, the interlayer being selected from a polyvinyl butyral (PVB) based material and an ethylvinylacetate (EVA) based material a third, non-wired glass sheet having a thickness within the range 1.5 mm to 2.5 mm spaced from the second glass sheet by a an intervening, intumescent layer.

10. A glazing panel having dimensions of at least 40 cm by 30 cm and having at least one of the following characteristics
a) the glazing panel has a fire rating of at least EW30 and consists essentially of the structure first glass sheet/interlayer/second glass sheet/intumescent layer/third glass sheet with each of the glass substrates having a thickness in the range 1.5 mm to 4 mm
b) the glazing panel has a fire rating of at least EW60 and consists essentially of the structure first glass sheet/interlayer/second glass sheet/intumescent layer/third glass sheet with each of the glass substrates having a thickness in the range 2.5 mm to 4.5 mm
c) the glazing panel has a fire rating of at least EW60 and consists essentially of the structure first glass sheet/interlayer/second glass sheet/intumescent layer/third glass sheet/interlayer/fourth glass sheet with each of the glass sheets having a thickness in the range 1.5 mm to 4.5 mm
d) the glazing panel has a fire rating of at least EI90 and consists essentially of the structure glass sheet/intumescent layer/ glass sheet/intumescent layer/glass sheet/ intumescent layer/glass sheet/interlayer/ glass sheet/intumescent layer/ glass sheet/intumescent layer/glass sheet/intumescent layer/glass sheet with each of the glass sheets having a thickness in the range 1.5 mm to 4.5 mm
e) the glazing panel has a fire rating of at least EI120 and consists essentially of the structure glass sheet/intumescent layer/ glass sheet/intumescent layer/glass sheet/ intumescent layer/glass sheet/interlayer/ glass sheet/intumescent layer/ glass sheet/intumescent layer/glass sheet/intumescent layer/glass sheet/ interlayer/ glass sheet/intumescent layer/ glass sheet/intumescent layer/glass sheet/ intumescent layer/glass sheet with each of the glass sheets having a thickness in the range 1.5 mm to 4.5 mm
f) the glazing panel has a fire rating of at least E30 and consists essentially of the structure glass sheet/interlayer/glass sheet/sealed gas filled separation/glass sheet/intumescent layer/glass sheet with each of the glass sheets having a thickness in the range 2.5 mm to 3.5 mm
g) the glazing panel has a fire rating of at least E30 and consists essentially of the structure glass sheet having a thickness in the range 2.5 mm to 4.5 mm /interlayer/glass sheet having a thickness in the range 3.5 mm to 4.5 mm /low emissivity coating/sealed gas filled separation/glass sheet having a thickness in the range 2.5 mm to 3.5 mm /intumescent layer/glass sheet having a thickness in the range 2.5 mm to 3.5 mm
h) the glazing panel has a fire rating of at least E30 and consists essentially of the structure glass sheet having a thickness in the range 5.5 mm to 6.5 mm /low emissivity coating/interlayer/glass sheet having a thickness in the range 2.5 mm to 3.5 mm /sealed gas filled separation/glass sheet having a thickness in the range 2.5 mm to 3.5 mm /intumescent layer/glass sheet having a thickness in the range 2.5 mm to 3.5 mm;

11. A glazing panel in accordance with claim 3 or claim 10, in which the intumescent layer comprises Silica (Si02) and Sodium Oxide (Na2O) and in which the ratio Rp of SiO2/Na2O by weight is greater than 3.3.

12. A glazing panel in accordance with any one of claims 3, 10 and 11, in which the water content of the intumescent layer is less than or equal to 22% by weight.

13. A glazing panel in accordance with any preceding claim, in which the glazing panel has a fire rating of at least EW30.

14. A glazing panel in accordance with any preceding claim, in which at least one of the glass sheets is a soda lime glass.

15. A glazing panel in accordance with any preceding claim, in which at least one of the glass sheets is selected from the group consisting of glass having an expansion coefficient less than or equal to 9 x 10⁻⁶ and glass having a Tg greater than or equal to 580°C.

16. A glazing panel in accordance with any preceding claim, in which at least one of the glass sheets has a surface compression at a central point of at least 80 MPa.

17. A glazing panel in accordance with any preceding claim, in which the interlayer has a maximum heat release rate of less than 650 kW/m²

18. A glazing panel in accordance with any preceding claim, in which the interlayer has a maximum heat release rate of less than 500 kW/m².

19. A glazing panel in accordance with any preceding claim, in which the glazing panel has a mechanical resistance rating of at least 2B2 in a pendulum test according to European standard EN12600.

20. A glazing panel in accordance any preceding claim, in which at least one of the glass sheets is provided with a solar control coating or heat reflective coating.

21. A glazing panel in accordance with any preceding claim, in which the glazing panel has a light transmission greater than or equal to 60 % and a solar factor less than or equal to 55 %.

22. A glazing panel in accordance with any preceding claim, in which the glazing panel has dimensions of at least 95 cm by 190 cm

23. A glazing panel in accordance with any preceding claim, in which the glazing panel has a total ultra violet light transmittance of less than 1% measured according to European standard EN410.

24. A glazing panel in accordance with any preceding claim, in which each and any intumescent layer, if present, has a thickness of less than or equal to 2mm.
